# EUROPEAN PATENT SPECIFICATION

(11) **EP 0 263 668 B1**
(45) Date of publication and mention of the grant of the patent: **07.01.1998**
(21) Application number: 87308823.1
(22) Date of filing: 06.10.1987
(51) Int. Cl.: B60T 8/62, B60T 8/00

(54) **Fluid pressure operable vehicle braking system**
Flüssigkeitsdruckgesteuertes Fahrzeugbremssystem
Système de freinage de véhicule commandé par pression fluidique

(30) Priority: 07.10.1986 GB 8623988
(43) Date of publication of application: 13.04.1988
(73) Proprietor: Knorr-Bremse Systems for Commercial Vehicles Limited, Kingswood, Bristol BS15 2NL (GB)
(72) Inventor: Gibbons, Peter Frederick, Hanham Bristol BS15 3LR (GB); Bowker, Glenn Stephen, Longwell Green Bristol BS15 6BS (GB)
(74) Representative: Turner, Alan Reginald

(56) References cited:
- EP-A- 0 163 774
- DE-A- 3 444 301
- US-A- 3 988 043
- US-A- 4 402 047

## Description

This invention relates to fluid pressure operable multi-circuit vehicle brtaking systems, especially but not exclusively compressed air braking systems.

Multi-circuit compressed air braking systems have been proposed for normal service braking of a vehicle provided with a dual circuit compressed air driver's control valve device, controlling two separate brake circuits. Typically, such separate brake circuits operate to control brake actuators on separate axles so that failure of braking by one circuit will leave the braking by the other circuit unaffecteed. In addition to the service braking facility, heavy commercial vehicles are usually provided with a driver's secondary and parking brake control valve typically operating spring brakes on vehicle rear axles.

It is well recognised that total response time of a brake system, that is the time taking for the system to respond to driver action after his recognition that a brake application is to be made, is an important contributory factor affecting the distance a moving vehicle will travel before braking will result in the vehicle being brought to rest or reduced to a desired lower speed. Stopping or decelerating distances are, of course, improved by optimising driver alertness and response but appreciable delay in commencing deceleration can result from the time taken for air pressure signals to be actually transmitted from the driver's control valve through pipes and valves or other control means to the brake actuators.

In an already published European Patent Specification No. 0 163 774 there is described a fluid pressure service brake system as applied to an axle of a vehicle which operates in response to a driver operated brake pedal which produces an electrical signal representing desired brake pressure. Fluid pressure transducers are provided which produce electric signals representing actual brake pressure which is applied to brake actuators via control valves operating in closed loop control of the pressure effected by an electrical control device. The described system also includes wheel speed sensors arranged to override the pressure control in the event of inadvisable slippage of the wheels. Although this system has the merit of a possible higher rate of response than a conventional non-electric system it is clearly dependent upon the driver depressing the brake pedal sufficiently to produce what the driver estimates as the desired braking pressure to achieve a desired deceleration for the speed and loading of the vehicle.

The present invention has an object of reducing the uncertainty of such driver operated control of the brakes of a vehicle.

According to the present invention there is provided a multi-circuit fluid pressure operable vehicle braking system in accordance with claim 1.

Further embodiments of the invention are defined in the dependent claims.

Preferably said driver operable signal control device produces an electromagnetic signal or signals.

The term electromagnetic signals is to be construed as including electrical or electronic signals which are transmissible conductively, inductively or capacitively or signals which are transmissible optically or sonically, whether signals are analogue or digital.

Preferably however, said control signals are electronic signals representing desired vehicle decleration and are supplied via electronic controllers with respective wheel speed sensing means for closed loop deceleration control.

In order that the invention may be more clearly understood and readily carried into effect, the same will now be further described by way of a particular example with reference to the accompanying drawings of which;
- Fig. 1: illustrates a multi-circuit fluid pressure operable vehicle braking system in accordance with the invention
- Fig. 2: illustrates an enlarged block schematic view of a system supervisor unit and,
- Fig. 3: illustrates an enlarged block schematic view of an axle control unit.

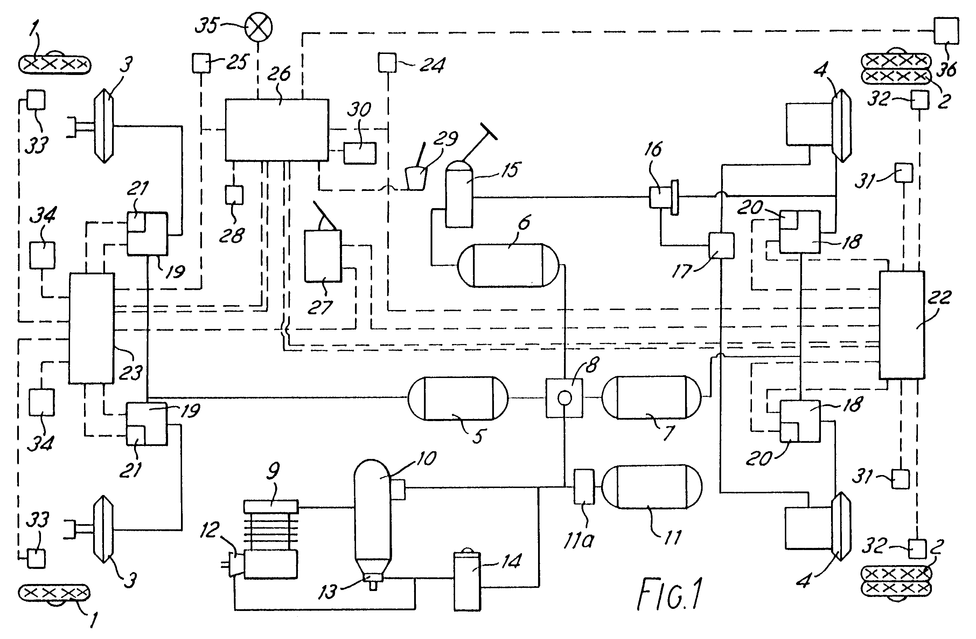

Referring to Fig. 1, the system illustrated therein is intended to be applied to a heavy commercial vehicle having a front axle with wheels denoted by reference 1 and one or more rear axles. In this case a single rear axle is provided with wheels denoted by reference 2. The wheels 1 of the front axle are provided with conventional compressed air diaphragm actuators 3 for service braking and the rear wheels 2 are provided with combined service and spring brake actuators 4. As will be seen, various actuators are supplied with fluid pressure from reservoirs denoted by references 5, 6 and 7, charged through a multi-circuit protection valve 8 by an engine driven compressor 9, supplying compressed air through an air dryer 10. A further reservoir 11 for vehicle auxiliaries is also charged via 10 through a single circuit protection valve 11a to protect the brake reservoirs in the event of a failure associated with 11.

The compressor 9 is provided with a fluid pressure operable clutch device 12 by means of which it is connected to or disconnected from the engine, the clutch device 12 and a purge valve 13 of the air dryer 10 being controlled by a conventional governor 14 which senses in known manner the pressure existing in an input chamber of the multi-circuit protection valve 8.

Referring briefly to the secondary braking system operation, this is supplied with compressed air pressure by reservoir 6 and is controlled by a pneumatic hand valve 15 of suitable known form operation of which applies pressure via a differential protection valve 16 via a quick release valve 17 to the spring brake portions of actuators 4. The differential protection valve 16 further receives an input from the service modulating valves 18, to be referred to, for preventing compounding of service brake and spring brake forces as is well known in the art. In normal running the valve 15 is placed in a release position and pressure is applied from reservoir 6 to the spring brake portions of actuators 4 but these can be applied by moving the hand lever of valve 15 to an applied position whereby partial venting of air pressure in the spring brakes can result, assuming this is not prevented by the presence of service brake pressure, in the protection valve 16, from the service system. Parking is achieved by total venting of the spring brakes valve 15 via valve 17.

Having referred to portions of the apparatus which are more or less conventional, reference will now be made to the service braking portions of the system wherein fluid pressure from reservoirs 5 and 7 is controlled by electro-pneumatic modulating valves 19 for the front axle service brake actuators 3 and electro-pneumatic modulating valves 18 for the service portions of the rear wheel actuators 4. The modulator valves are mounted on the chassis or axle adjacently or near to the respective actuators such that minimum time delay is suffered by pressure signals passing from the modulator valves to respective actuators. The rear axle modulator valves 18 are controlled by electric current signals supplied to them by an electronic rear axle controller denoted by reference 22. The modulator valves 18 also incorporate pressure tranducers 20 whereby they can feed back to 22 electric signals indicative of their output pressures, for closed loop control. Again the front axle modulator valves 19 are controlled by electric current signals supplied to them by an electronic front axle controller denoted by reference 23. The modulator valves 19 also incorporate pressure tranducers 21 whereby they can feed back to 23 electric signals indicative of their output pressures for closed loop control. The axle controllers 22 and 23 are supplied by independent vehicle battery supplies denoted by references 24 and 25 respectively each of which is also available as a source of supply to an electronic service system supervisor unit denoted by reference 26. Unit 26 includes means to monitor the braking pressures produced under the control respectively of the axle controllers 22 and 23 in response to separate electronic command signals from a dual circuit driver's foot operable brake unit 27.

Associated with the rear axle controller 22, there are pressure transducers 31 which provide electrical analogue signals corresponding to the axle loading and associated with front axle controller 23 similar pressure transducers 34 are provided. These pressure transducers are mounted on or adjacent to air suspension bags of the vehicle to continuously sense the pressure therein.

In order moreover to complete the control loops for the respective braked wheels and provide sensing for skid protection of the braking of the respective wheels, the rear wheels are provided with electro mechanical wheel speed sensors 32 and the front wheels are provided with electro mechanical wheel speed sensors 33. These sensors produce pulsating signals in known manner, the frequency of which is proportional to wheel speed.

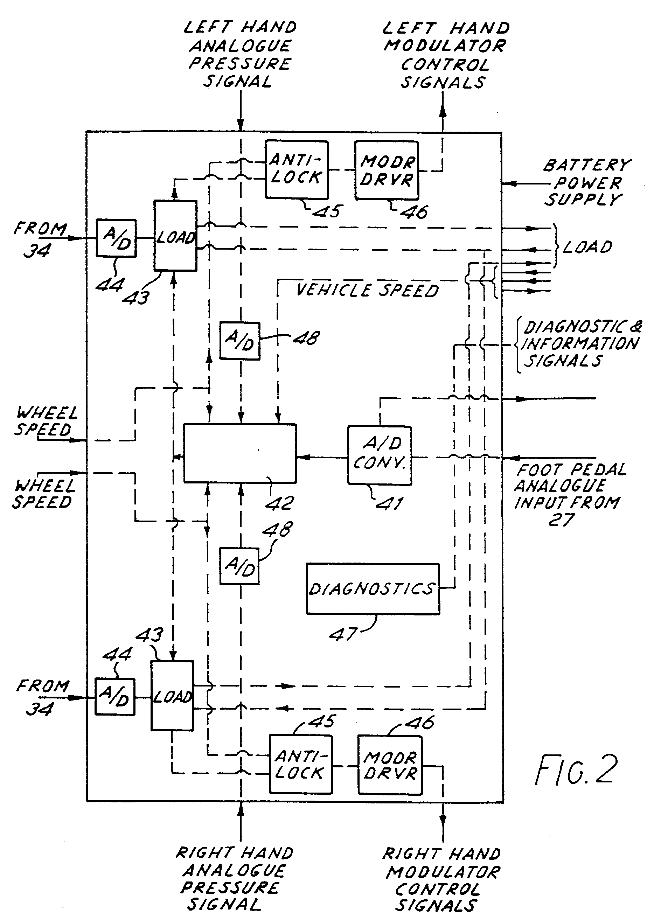

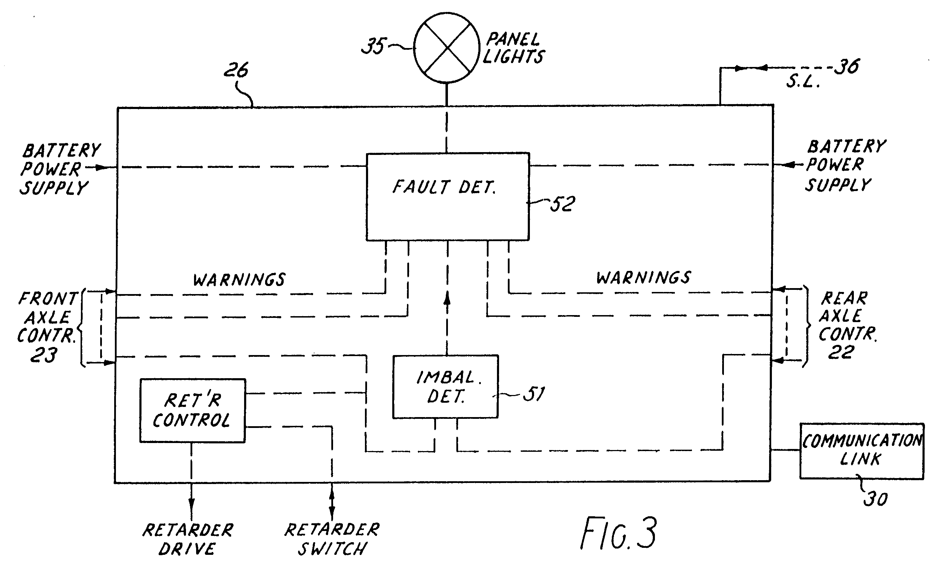

Optionally provided in the electronic service system supervisor unit 26, there are also connections and means which control and monitor the operation of a control input 28 for retarders (not shown) if fitted to the vehicle, and a cab-mounted driver's retarder control switch 29. The block reference 30 furthermore represents a diagnostic link for connection of a diagnostic tester (not shown) for quickly locating faults that may occasionally occur in the electronic system. A warning light display 35 is provided on the dash panel of the driver's cab to warn the driver of the presence of such faults even though they may not be apparent from the immediate performance of the vehicle. The operation of the service brake system of Fig. 1 will now be better appreciated with reference also to the schematic diagrams of Figs. 2 and 3 representing one of the two axle controllers 22 and 23 and system supervisor unit 26 respectively.

For normal service brake operation the driver's foot pedal unit comprises a dual circuit device 27 which replaces the hitherto more conventional dual foot valve of a pure pneumatic system. Device 27 provides one electrical analogue output to each of the front and rear axle controllers 23 and 22 to which electric current is also supplied from repsective battery sources 25 or 24.

The following description will now be mainly with reference to the front axle controller 23. The respective foot pedal analogue output signal from device 27 is applied to converter means 41 of the controller 23, as seen in Fig. 2, for effecting analogue to digital conversaion to produce a digital signal representative of desired vehicle deceleration. This signal is then modified in a function block represented by reference 42 in response to a plurality of controlling inputs from the respective axle controller and which includes means to produce a computed digital signal representing pressure depending also upon wheel speed signals from sensors 33 or 32. The axle controller also includes means for making the digital output conditional in each case upon a signal representative of vehicle speed derived from the system supervisor unit 26 (to be referred to with reference to Fig. 3. Unit 26 includes means whereby the vehicle speed signal is computed as a result of its interpretation of the outputs of all the wheel sensor signals on the vehicle namely by selecting the highest wheel speed signal. The signal representing the desired brake pressure is compared by comparison means in 22 and 23 with the feed back signals indicative of pressure transducer outputs of the respective pressure modulators. In the case of axle controller 23 these are the outputs of transducers 21 associated with modulators 19.

The thereby computed required pressure representing digital signal output from functional block 42 is applied individually to control the respective left and right hand modulator valves of the respective axle. In each case the signal fed to the respective left or right modulator valve is further influenced by load-dependent modification means 43 each dependent upon analogue to-digital conversion functions 44 of respective analogue pressure signals derived from the suspension pressure transducers 31 or 34. In the case of the front axle these are transducers 34. Subject then to antilock control provided by antilock control means 45, the respective digital right and left hand modulator valve control signals are supplied via respective modulator drivers 46 to the modulating valves.

The respective left and right hand modulating valves 19 then operate in response to these control signals to apply output pressures to the respective service actuators 3, in the case of the front axle. Precise and stable pressure control is then achieved by virtue of the pressure transducer analogue feedback signals to the axle controller23 from respective pressure tranducers 21. These analogue signals are converted to digital signals by converters 48. As a result of any wheel tending to decelerate excessively the anti-lock functions in 45 also operate to modify the modulator control signals to modulator drivers 46 to reduce the braking force and prevent incipient skidding.

Whilst the foregoing discussion primarily concerns the front axle controller 23, the rear axle controller 22 operates in identical fashion and both controllers 22 and 23 operate under supervision of the system supervisor unit 26.

The functions included in the functional blocks of controllers 22 and 23 are preferably built into a programmed micro computer device and as indicated in Fig. 2, multiple inputs and outputs are provided connected to the system supervisor unit 26.

As seen in Fig. 3, the system supervisor unit 26 has corresponding multiple connections to the front and rear axle controllers 23 and 22. These include inputs carrying signals dervied from the foot pedal unit 27 which, if detected by an imbalance comparator function 51 as being inconsistent, will result in a warning indication, via a fault detection function 52, appearing visually on panel lights indicated at 35. Logic means is also included to determine and return to units 22 and 23 whichever deceleration signal, derived from 27, is determined to be the more reliable. Thus unit 26 includes means whereby if one signal is rapidly fluctuating the other will be selected to be used. Again, if one is a steady output value whereas the other is zero the former will be selected to be used.

Stop-light indication and proving is also provided in 26 over a connection link 36 along with multiple fault detection and other maloperations sensed by the front and rear axle controllers 22 and 23 each of which has a diagnostic logic function as represented by block 47 in Fig. 2 in the case of the front axle unit.

Although in the foregoing description of a preferred embodiment of the invention, the vehicle is assumed to have an air suspension, it will be appreciated that other forms of suspension system may be employed and the pressure transducers such as 31 and 34 will be replaced by alternative load-dependent means.

## Claims

1. A multi-circuit fluid pressure operable vehicle braking system including first and second fluid pressure operable brake actuators (3) connected to brakes of respective wheels (1) or axles of the vehicle, electrically operable fluid pressure modulator valves (19) connected to control the fluid pressure applied from a pressure source (5) to said actuators (3), a driver-operable signal control device (27) for generating a variable control signal representing desired vehicle deceleration, wheel speed sensing means (33) for generating signals corresponding to the speed of respective wheels (1), pressure transducers (21) for generating feedback signals corresponding to the fluid pressures applied to said actuators (3), and a controller (23) for controlling the modulator valves (19) in accordance with said signals from the control device (27), the wheel speed sensing means (33) and the pressure transducers (21), characterised in that vehicle load sensing means (34) is provided for generating signals corresponding to the load on the vehicle wheels (1) or axles; and in that said controller (23) includes function means (42) which responds to said control signal and to signals derived from said wheel speed sensing means (33), and modification means (43) which responds to signals from the vehicle load sensing means (34), so that the controller (23) provides a computed output signal based on the modified output signal of the function means representing required brake pressure with which said feedback signals are compared to control the modulator valves (19) and provide required fluid pressures to said actuators (3) in response to the variable control signal.

2. A multi-circuit fluid pressure operable vehicle braking system as claimed in claim 1 characterised in that said driver operable signal control device (27) provides an electromagnetic signal or signals.

3. A multi-circuit fluid pressure operable vehicle braking system as claimed in claim 1 or 2 characterised in that said driver operable signal control device provides an electromagnetic analogue signal and said system includes analogue to digital conversion means for converting said analogue signal to a digital signal representing desired vehicle deceleration.

4. A multi-circuit fluid pressure operable vehicle braking system as claimed in claim 1,2, or 3 characterised in that said controller (23) is a first controller which applies computed electromagnetic signals to modulating valves (19) of a first axle and a second such controller (22) is provided operable to apply computed electromagnetic control signals to modulating valves (18) of a second axle each said controller being connected to receive independent electromagnetic signals derived from the driver-operable signal control device (27) representing desired vehicle deceleration.

5. A multi-circuit fluid pressure operable vehicle braking system as claimed in claim 5 characterised by supervision means operable to detect an imbalance between said independent electromagnetic signals and to condition the said controllers (22,23) to utilise whichever of said independent signals is deemed to be the more reliable.

6. A multi-circuit fluid pressure operable vehicle braking system as claimed in claim 5, characterised by said controllers (23,22) having separate electrical supplies (24,25).

7. A multi-circuit fluid pressure operable vehicle braking system as claimed in any preceding claim characterised by supervision means (26) responsive to maloperation as sensed by diagnostic logic (47) of the or either said controller to provide a "fault" indication.

8. A multi-circuit fluid pressure operable vehicle braking system as claimed in any preceding claim characterised by supervision means (26) for providing vehicle stop-light indication and proving.

9. A multi-circuit fluid pressure operable vehicle braking system as claimed in claim 5,6,7 or 8 characterised by indication being provided by a panel light.

## Patentansprüche

1. Ein durch den Druck eines Arbeitsfluids betätigtes Bremssystem mit mehreren Arbeitskreisen, enthaltend erste und zweite, von dem Druck des Bremsfluids betriebene Betätigungsorgane (3), die mit je einer Bremse eines Rades (1) oder Achse bzw. Welle des Fahrzeuges verbunden sind; elektrisch betätigte Fluiddruck-Modulatorventile (19) zur Steuerung des von einer Druckmittelquelle (5) auf die Betätigungsorgane (3) ausgeübten Druckes; eine vom Fahrer betätigte Signalsteuervorrichtung (27) zur Generierung eines variablen Steuersignals, welches die gewünschte Verzögerung darstellt; Fühler (33) für die Radgeschwindigkeit zur Generierung entsprechender Signale der Geschwindigkeit der Räder (1); Druckwandler (21) zur Generierung eines Rückführungssignals entsprechend dem auf die Betätigungsorgane (3) ausgeübten Bremsdruck; und ein Steuergerät (23) zur Steuerung der Modulatorventile (19) entsprechend den Signalen von dem Signal-Steuergerät (27), von den Radgeschwindigkeitsfühlern (33) und von den Druckwandlern (21), dadurch gekennzeichnet, dass Fahrzeuglast-Fühlmittel (34) (Fühler) vorgesehen sind zur Generierung von Signalen für die Last auf die einzelnen Fahrzeugräder (1) oder Achsen; und dass das Steuergerät (23) Funktionsmittel (42) enthält, die auf das Steuersignal ansprechen bzw. reagieren und auf die von den Lastfühlern (33) erhaltenen Signale ansprechen bzw. reagieren; und Modifiziermittel (43), die auf die Signale von den Fahrzeuglastfühlern (34) ansprechen, derart dass das Steuergerät (23) ein berechnetes Ausgangssignal liefert, ausgehend von dem modifizierten Ausgangssignal der Funktionsmittel, das errechnete Ausgangssignal repräsentiert den erforderlichen Bremsdruck, mit welchem die Feedback-Signale verglichen werden zur Steuerung der Modulatorventile (19) und zur Lieferung des erforderlichen Fluid-Drucks auf die Betätigungsorgane (3) in Abhängigkeit von dem variablen Steuersignal.

2. Ein Fahrzeug-Bremssystem nach Anspruch 1, dadurch gekennzeichnet, dass die vom Fahrer bediente Signalsteuervorrichtung (27) ein elektromagnetisches Signal oder Signale liefert.

3. Ein Fahrzeug-Bremssystem nach Anspruch 1 oder 2, dadurch gekennzeichnet, dass die vom Fahrer bediente Signalsteuervorrichtung ein elektromagnetisches Analogsignal liefert und das System Analog-Digital-Wandler-Mittel aufweist, zur Umwandlung des analogen Signals in ein digitales Signal für die erforderliche Fahrzeugverzögerung.

4. Ein Fahrzeug-Bremssystem nach Anspruch 1, 2 oder 3, dadurch gekennzeichnet, dass das Steuergerät (23) ein erstes Steuergerät aufweist, welches berechnete elektromagnetische Signale an das Modulationsventil (19) einer ersten Achse (Vorderachse) liefert, und ein zweites solches Steuergerät (22) liefert ein berechnetes elektromagnetisches Steuersignal an die Modulationsventile (18) einer zweiten Achse (einer Hinterachse); jedes der Steuergeräte (22, 23) erhält voneinander unabhängige elektromagnetische Signale von dem vom Fahrer betätigten Signalsteuergerät (27) entsprechend der gewünschten Fahrzeugverzögerung.

5. Ein Fahrzeug-Bremssystem nach Anspruch 5, gekennzeichnet durch Überwachungsmittel zur Anzeige eines Ungleichgewichts zwischen den unabhängigen elektromagnetischen Signalen und zum Kondijenige der beiden unabhängigen Signale verwendet wird, welches als zuverlässiger erscheint.

6. Ein Fahrzeug-Bremssystem nach Anspruch 5, dadurch gekennzeichnet, dass die Steuergeräte (23, 22) getrennte elektrische Zuleitungen oder Versorgung (24, 25) aufweist.

7. Ein Fahrzeug-Bremssystem nach wenigstens einem der vorhergehenden Ansprüche, gekennzeichnet durch Überwachungsmittel (26), die auf Fehlbedienung ansprechen, welche erfasst wird durch eine Diagnostiklogik (47) von dem bzw. von den Steuergeräten (23, 22), zur Lieferung eines Fehlersignals.

8. Ein Fahrzeug-Bremssystem nach einem der vorhergehenden Ansprüche, gekennzeichnet durch Überwachungsmittel (26) zur Lieferung einer Anzeige über das Standlicht und zur Kontrolle des Standlichts.

9. Ein Fahrzeug-Bremssystem nach Ansprüchen 5, 6, 7 oder 8, dadurch gekennzeichnet, dass eine Anzeige bzw. Anzeigen durch ein Licht auf dem Armaturenbrett vorgesehen ist bzw. sind.

## Revendications

1. Système de freinage à circuit multiple, pour véhicule à actionnement par pression de fluide à circuit multiples comprenant un premier et un second dispositifs d'actionnement (3) de frein fonctionnant par pression de fluide reliés aux freins des roues respectives (1) ou aux essieux du véhicule, des clapets de modulation (19) de pression de fluide, à actionnement électrique, qui sont reliés pour commander la pression de fluide appliquée depuis une source de pression (5) auxdits dispositifs d'actionnement (3), un dispositif (27) de commande de signaux à actionnement par le conducteur pour produire un signal de commande variable représentant la décélération désirée du véhicule, un moyen capteur (33) de la vitesse des roues pour produire des signaux correspondant à la vitesse des roues respectives (1), des transducteurs de pression (21) pour produire des signaux de retour correspondant aux pressions de fluide appliquées aux dits dispositifs d'actionnement (3), et un dispositif de commande (23) pour commander les clapets de modulation (19) selon lesdits signaux provenant du dispositif de commande (27), du dispositif capteur (33) de la vitesse des roues et des transducteurs de pression (21), caractérisé en ce qu'un dispositif capteur de la charge du véhicule est prévu pour produire des signaux correspondant a la charge sur les roues du véhicule (1) ou sur les essieux ; et en ce que le dit dispositif de commande (23) comprend un dispositif de fonction (42) qui répond au dit signal de commande et à des signaux dérivés du dit dispositif capteur (33) de la vitesse des roues, et un dispositif modificateur (43) qui répond à des signaux provenant du dispositif capteur (34) de la charge du véhicule, de façon que le dispositif de commande (23) fournisse un signal de sortie calculé qui est basé sur le signal de sortie modifié du dispositif de fonction représentant la pression de freinage requise avec lequel les dits signaux de retour sont comparés pour commander les clapets de modulation (19)et fournir les pressions de fluides requises aux dit dispositifs d'actionnnement (3) en réponse au signal de commande variable.

2. Système à circuit multiple de freinage de véhicule à actionnement par une pression de fluide selon la revendication 1, caractérisé en ce que ledit dispositif (27) de commande de signaux à actionnement par le conducteur fournit un ou des signaux électromagnétiques.

3. Système a circuit multiple de freinage de véhicule à actionnement par pression de fluide selon la revendication 1 ou la revendication 2, caractérisé en ce que ledit dispositif de commande de signaux a actionnement par le conducteur fournit un signal analogique électromagnétique et ledit système comprend un dispositif de conversion d'analogique en digital pour convertir ledit signal analogique en un signal digital représentant la décélération désirée du véhicule.

4. Système a circuit multiple de freinage de véhicule à actionnement par pression de fluide selon la revendication 1,2, ou 3, caractérisé en ce que ledit dispositif de commande (23) est un premier dispositif de commande qui applique des signaux électromagnétiques calculés aux clapets de modulation (19) d'un premier essieu, et un second tel dispositif de commande (22) est prévu dont l'actionnement applique des signaux de commande électromagnétiques calculés aux clapets de modulation (18) d'un second essieu, chaque dit dispositif de commande étant relié pour recevoir des signaux électromagnétiques indépendants dérivés du dispositif (27) de commande de signaux à actionnement par le conducteur représentant la décélération désirée du véhicule.

5. Système à circuit multiple de freinage de véhicule à actionnement par pression de fluide selon la revendication 5, caractérisé par un dispositif de supervision actionné pour détecter un déséquilibre entre lesdits signaux électromagnétiques indépendants et pour conditionner lesdits dispositifs de commande (22,23) pour utiliser celui desdits signaux indépendants qui est considéré comme étant le plus fiable.

6. Système à circuit multiple de freinage de véhicule à actionnement par pression de fluide selon la revendication 5, caractérisé en ce que lesdits dispositifs de commande (23,22) ont des alimentations électriques (24,25) séparées.

7. Système a circuit multiple de freinage de véhicule à actionnement par pression de fluide selon l'une quelconque des revendications précédentes, caractérisé par un dispositif de supervision (26) répondant à un disfonctionnement capté par la logique de diagnostic (47) dudit dispositif de commande ou de chaque dispositif de commande pour fournir une indication de 〈〈 défaut 〉〉.

8. Système à circuit multiple de freinage de véhicule à actionnement par pression de fluide selon l'une quelconque des revendications précédentes, caractérisé par un dispositif de supervision (26) fournissant une indication sur les feux d'arrêt du véhicule et la vérifiant.

9. Système à circuit multiple de freinage de véhicule à actionnement par pression de fluide selon la revendication 5,6,7 ou 8, caractérisé en ce que l'indication est fournie par un panneau lumineux.
